# EUROPÄISCHE PATENTANMELDUNG

(11) **EP 1 486 894 A1**
(43) Veröffentlichungstag der Anmeldung: **15.12.2004**
(21) Anmeldenummer: 03013588.3
(22) Anmeldetag: 14.06.2003
(51) Int. Cl.: G06F 17/60

(54) **Verfahren zur Warenvermittlung**

(71) Anmelder: Digitel GmbH, 41564 Kaarst (DE)
(72) Erfinder: Varol, Selim, 41564 Kaarst (DE)
(74) Vertreter: Stenger, Watzke & Ring Patentanwälte

(57) **Zusammenfassung**

Die Erfindung betrifft ein Verfahren zur Warenvermittlung. Um ein Verfahren bereit zu stellen, das eine vereinfachte Handhabung gestattet, ohne eine räumliche Beschränkung durchführbar ist und darüber hinaus eine dynamische Anpassung an sich verändernde Verkaufsbedingungen ermöglicht, wird mit der Erfindung ein Verfahren zur Warenvermittlung vorgeschlagen, bei dem vom Warenanbieter ein bestimmtes Kontingent einer Ware zum Verkauf angeboten wird, und die das Verkaufsangebot bestimmenden Parameter sowie eine das Verkaufsangebot identifizierende Information für Dritte abrufbar auf einer zentralen Rechnereinheit gespeichert werden, bei dem von einem Dritten die das Verkaufsangebot bestimmenden Parameter unter Nennung der das Verkaufsangebot identifizierenden Information via einer kommunikationstechnischen Verbindung zur zentralen Rechnereinheit, vorzugsweise unter Verwendung eines Mobilfunkendgerätes, abgefragt und bei Zustimmung bestätigt werden, wobei die das Verkaufsangebot bestimmenden Parameter, insbesondere der Verkaufspreis, in Abhängigkeit bereits erfolgter Angebotsbestätigungen und/oder nach Vorgabe durch den Warenanbieter von der zentralen Rechnereinheit automatisch berechnet werden.

## Beschreibung

Die Erfindung betrifft ein Verfahren zur Warenvermittlung, welches dazu dient, potentielle Abnehmer einer Ware über bestehende Warenangebote zu informieren, bzw. die Verkaufsangebote bestimmenden Parameter bekannt zu machen.

Bekannt sind aus dem Stand der Technik manuell zu betreibende Warenvermittlungen, wobei im allgemeinen vorgesehen ist, daß der Warenanbieter seine zum Verkauf anstehende Ware in einer für ihn günstigen Weise präsentiert und unter Angabe entsprechender Informationen, wie beispielsweise dem Kaufpreis, ein Verkaufsangebot plaziert. Dieses von einem Dritten, dem Angebotsempfänger wahrgenommene Verkaufsangebot kann sodann von diesem bestätigt, das heißt angenommen werden. Im weiteren kommt es dann zur Abwicklung des Verkaufs.

Von Nachteil bei einer derartigen Warenvermittlung ist jedoch, daß eine Anpassung des Verkaufsangebots an die Wünsche der Angebotsempfänger, wenn überhaupt, dann nur zeitverzögert, vom Warenanbieter wahrgenommen und umgesetzt werden kann. Zudem bedarf es eines zum Teil erheblichen Zeit- und Arbeitsaufwandes, Verkaufsangebote einerseits und etwaige Kaufanfragen andererseits zu koordinieren. Insbesondere kann es nämlich in diesem Zusammenhang erforderlich sein, Verkaufspersonal vorzusehen, das es für die ordnungsgemäße Abwicklung zur Warenvermittlung auszubilden gilt.

Des weiteren ist von Nachteil, daß mit den bekannten Warenvermittlungsverfahren eine sich ändernde Marktlage nur bedingt berücksichtigt werden kann. Insbesondere ist es nicht möglich, ein sich änderndes Käuferverhalten gezielt zur Abgabe eines entsprechenden Verkaufsangebots zu nutzen. Bedingt ist dieser Nachteil zum einen durch die mangelnde Möglichkeit, Informationen betreffend das warenbezogene Kaufverhalten zusammenzutragen, zu analysieren und zur Abgabe eines entsprechenden Verkaufsangebots aufzubereiten sowie zum anderen durch das Fehlen einer die Angebotsannahmen koordinierenden Maßnahme. Dabei wirken sich die vorbeschriebenen Nachteile nicht nur für den Warenanbieter, sondern auch für die Angebotsempfänger aus, denn wird bei den vorbekannten Warenvermittlungsverfahren die durch eine Mehrzahl sich zu einer Gruppe zusammenschließenden Angebotsempfänger bedingte Kaufkraft völlig unberücksichtigt gelassen, so daß auch diesbezüglich Verbesserungsbedarf besteht.

Ausgehend vom Vorgenannten ist es daher **Aufgabe** der Erfindung, ein Verfahren zur Warenvermittlung bereit zu stellen, das eine vereinfachte Handhabung gestattet, ohne eine räumliche Beschränkung durchführbar ist und darüber hinaus eine dynamische Anpassung an sich ändernde Verkaufsbedingungen ermöglicht.

Zur **Lösung** dieser Aufgabe wird mit der Erfindung vorgeschlagen, ein Verfahren zur Warenvermittlung, bei dem vom Warenanbieter ein bestimmtes Kontingent einer Ware zum Verkauf angeboten wird und die das Verkaufsangebot bestimmenden Parameter sowie eine das Verkaufsangebot identifizierende Information für Dritte abrufbar auf einer zentralen Rechnereinheit gespeichert werden, bei dem von einem Dritten die das Verkaufsangebot bestimmenden Parameter unter Nennung der das Verkaufsangebot identifizierenden Information via einer kommunikationstechnischen Verbindung zur zentralen Rechnereinheit, vorzugsweise unter Verwendung eines Mobilfunkendgerätes, abgefragt und bei Zustimmung bestätigt werden, wobei die das Verkaufsangebot bestimmenden Parameter, insbesondere der Verkaufspreis, in Abhängigkeit bereits erfolgter Angebotsbestätigungen und/oder nach Vorgabe durch den Warenanbieter von der zentralen Rechnereinheit automatisch berechnet werden.

Die Besonderheit des Verfahrens liegt in der automatischen Anpassung der das Verkaufsangebot bestimmenden Parameter. Dabei kann in Abhängigkeit der sich am Markt einstellenden Information eine dynamische Verkaufsangebotsanpassung vorgenommen werden, die am Bedarf der potentiellen Angebotsempfänger ausgerichtet ist.

Erfindungsgemäß erfolgt die Verfahrensabwicklung automatisch unter Verwendung einer entsprechenden Rechnereinheit. Zu diesem Zweck sind der Rechnereinheit zunächst die Eckdaten des eine bestimmte Ware betreffenden Verkaufsangebots mitzuteilen. Eckdaten können in diesem Zusammenhang der Verkaufspreis, Liefer- und Garantiebedingungen, Bereitstellungszeit oder dergleichen sein. Publiziert wird dieses Verkaufsangebot über übliche Informationswege, beispielsweise durch die Schaltung von Werbung in entsprechenden Medien. Interessierte Angebotsempfänger können nun durch Kontaktaufnahme zur zentralen Rechnereinheit via einer kommunikationstechnischen Verbindung, vorzugsweise unter Verwendung eines Mobilfunkendgerätes, das bekanntgemachte Verkaufsangebot abfragen. Sagt ihnen dieses Angebot zu, so kann alsgleich eine Angebotsbestätigung erfolgen. Von Vorteil ist hierbei, daß die Angebotsbestätigung, das heißt die Annahme des Verkaufsangebotes automatisch von der Rechnereinheit abgewickelt werden kann, was eine insgesamt vereinfachte Verfahrensabwicklung ermöglicht und insofern zugunsten des Warenanbieters weniger zeit- und kostenaufwendig ist. Der das Verkaufsangebot annehmende Empfänger kommt gleichfalls in den Vorteil einer vereinfachten Verfahrensdurchführung, denn kann dieser insbesondere unabhängig von seinem Aufenthaltsort die von ihm gewünschte Warenvermittlung bequem, beispielsweise auch von zuhause durchführen. Sollte der Angebotsempfänger indes nicht mit dem Verkaufsangebot bzw. den das Verkaufsangebot bestimmenden Parametern einverstanden sein, so bestätigt er das Verkaufsangebot nicht und eine Warenvermittlung kommt nicht zustande.

Von besonderem Vorteil ist, daß das erfindungsgemäße Verfahren eine automatische Anpassung des Verkaufsangebotes bzw. der das Verkaufsangebot bestimmenden Parameter ermöglicht. In Abhängigkeit der Marktlage bzw. der sich einstellenden Verkaufsbedingungen kann von der zentralen Rechnereinheit nämlich ein immer wieder neues Verkaufsangebot berechnet werden, das von dem Dritten, also dem Angebotsempfänger bedarfsgerecht abgefragt werden kann. Sobald sich infolge der Verkaufsangebotsneuberechnung durch die zentrale Rechnereinheit ein für ihn akzeptables Verkaufsangebot einstellt, kann er diesem in vorbeschriebener Weise durch Bestätigung zustimmen. Vorgesehen sein kann beispielsweise, daß die Verkaufsangebotsneuberechnung in Abhängigkeit der Anzahl bereits erfolgter Angebotsannahmen durchgeführt wird. Dabei wird von der zentralen Rechnereinheit automatisch ein reduzierter Verkaufspreis für die noch nicht verkaufte Ware in Abhängigkeit der bereits abverkauften Waren berechnet. Berücksichtigt wird durch eine solche berechnete Verkaufspreisstaffelung die im Markt potentiell vorhandene Kaufkraft, was sowohl dem Warenanbieter als auch den Angebotsempfängern zum Vorteil gereicht. Planbar kann nämlich durch den Warenanbieter ein Ausverkauf seiner Warenbestände in vergleichsweise kurzer Zeit erreicht werden, was die auf seiner Seite anfallenden Kosten reduziert. Diese sich beim Warenanbieter einstellende Kostenreduzierung kann an die Angebotsempfänger weitergegeben werden, was eine Reduzierung des Kaufpreises ermöglicht. Dabei ergibt sich für den Angebotsempfänger die Situation, daß er zwar durch möglichst langes Herauszögern einer Verkaufsangebotsbestätigung einen unter Umständen deutlich reduzierten Verkaufspreis erzielen kann, doch läuft er andererseits Gefahr, daß das gesamte zum Verkauf anstehende Warenkontingent ausverkauft ist, bevor er zur Zustimmung zum Verkaufsangebot eine entsprechende Bestätigung abgeben kann.

Weitere zur Modifizierung des Verkaufsangebotes dienende Parameter können die Angebotszeit, die Anzahl der Angebotsabfragen und/oder die Anzahl der pro Zeiteinheit erfolgten Angebotsbestätigungen sein. Sollte sich beispielsweise in Bezug auf eine bestimmte Ware herausstellen, daß innerhalb einer nur kurzen Angebotszeit bereits eine Mehrzahl von Angebotsbestätigungen eingegangen sind, so kann hieraus seitens des Warenanbieters der Schluß gezogen werden, daß die Resonanz bezüglich dieser Ware besonders groß ist. In der Konsequenz kann dies bedeuten, daß der Warenanbieter den Verkaufspreis nach oben setzt oder aber dafür Sorge trägt, daß das zum Verkauf anstehende Warenkontingent vergrößert wird. Das erfindungsgemäße Verfahren erlaubt es dem Warenanbieter mithin, eine automatische Anpassung seines Verkaufsangebotes dynamisch an die im Markt herrschende Verkaufssituation anzupassen. Dienlich für den Warenanbieter kann zudem die Anzahl der Angebotsabfragen sein. Diese können nämlich einen Gradmesser für die Resonanz im angesprochenen Kundenkreis sein, wobei sich ein unter Umständen einstellendes Mißverhältnis zwischen Angebotsabfragen einerseits und Angebotsbestätigung andererseits den Rückschluß zuläßt, daß der vom Warenanbieter anvisierte Verkaufspreis zu hoch angesetzt ist. Unter Vorgabe entsprechender Sollwerte kann so von der zentralen Rechnereinheit ein neuer Kaufpreis berechnet werden, der automatisch so weit reduziert wird, bis das Mißverhältnis zwischen Angebotsabfragen und Angebotsbestätigungen zur Zufriedenheit des Warenanbieters bereinigt ist. Ferner kann die Anzahl der pro Zeiteinheit erfolgten Angebotsbestätigungen zur Bestimmung des Kaufpreises berücksichtigt werden.

Zum Aufbau einer kommunikationstechnischen Verbindung zwischen der zentralen Rechnereinheit auf der einen Seite und dem Angebotsempfänger auf der anderen Seite wird vorzugsweise ein Mobilfunkendgerät verwendet. Natürlich sind auch andere kommunikationstechnische Verbindungen denkbar, wie sie im Stand der Technik allgemein bekannt sind. Entscheidend ist jedoch, daß der Angebotsempfänger via einer kommunikationstechnischen Verbindung zur zentralen Rechnereinheit eine Verkaufsangebotsbestätigung abgeben kann. Zur Identifizierung der vom Angebotsempfänger gewünschten Ware bzw. des ihn interessierenden Verkaufsangebots wird eine entsprechende das Angebot oder die Ware identifizierende Information verwendet, die der Angebotsempfänger im Zuge der Verfahrensabwicklung an die zentrale Rechnereinheit zu übertragen hat. Bevorzugterweise wird zur Identifizierung der Ware bzw. des Verkaufsangebotes eine mehrstellige Identifikationsnummer verwendet, die der zentralen Rechnereinheit mittels Eingabe über das Telefon mitgeteilt werden kann. Eine insbesondere einfache Handhabung ergibt sich dabei dann, wenn vom Angebotsempfänger zur Anwahl der zentralen Rechnereinheit eine Vorwahlnummer genutzt werden kann, an die zur Identifizierung der Ware bzw. des Verkaufsangebotes die Identifikationsnummer angehängt werden kann. Der Angebotsempfänger braucht dann nur die sich aus Vorwahl und Identifikationsnummer ergebende Gesamtnummer über das Telefon zu wählen und erhält nach Durchschaltung zur zentralen Rechnereinheit das von ihm gewünschte Verkaufsangebot automatisch mitgeteilt. Entscheidet er sich gegen die Annahme, so kann er mit Beendigung des Telefongespräches das erfindungsgemäße Verfahren abbrechen. In der Hoffnung, daß der Verkaufspreis mit fortschreitender Verkaufsdauer sinkt, kann der Angebotsempfänger sodann einige Zeit später unter Verwendung der gleichen Nummer die zentrale Rechnereinheit wiederholt anrufen. Sollte sich zwischenzeitlich aufgrund eines gesteigerten Verkaufes eine Verkaufspreisreduzierung ergeben haben, so wird dieser neue Verkaufspreis dem Angebotsempfänger mitgeteilt. Erklärt sich dieser nunmehr mit dem Verkaufsangebot einverstanden, so kann er dieses bestätigen. Vorzugsweise erfolgt dies durch einfache Eingabe einer von der zentralen Rechnereinheit vorgegebenen Tastaturkombination.

Zur Einsparung von insbesondere Personalkosten ist dabei erfindungsgemäß vorgesehen, daß die Warenvermittlung vollautomatisch erfolgt. Es ist also nicht erforderlich, Personal für die Angebotsvermittlung bzw. Annahme vorzuhalten. Auch kann der kommunikationstechnische Austausch mit dem Angebotsempfänger vollautomatisch über entsprechende Ansagetexte abgewickelt werden. Eine deutliche Kostenreduzierung gegenüber herkömmlichen Verfahren ist in vorteilhafter Weise die Folge.

Die Bezahlung eines vom Angebotsempfänger angenommenen Verkaufsangebotes kann in an sich bekannter Weise gleichfalls über die kommunikationstechnische Verbindung zur zentralen Rechnereinheit abgewickelt werden. Vorzugsweise bietet sich in diesem Zusammenhang die Zahlung mittels Kreditkarte oder vergleichbarer Zahlungsmittel an. In Abwicklung der durch den Angebotsempfänger bestätigten Annahme kann von der zentralen Rechnereinheit sogleich alles Weitere automatisch veranlaßt werden, so daß eine auftragsgemäße Abwicklung reibungslos durchgeführt werden kann. Zu diesem Zweck wird vor oder nach einer Angebotsbestätigung durch den Angebotsempfänger eine Identifizierung des Angebotsempfängers durchgeführt und die diesbezüglichen Daten werden von der zentralen Rechnereinheit gespeichert. Umfassen können solche Daten Name und Wohnort des Angebotsempfängers sowie zusätzliche Daten, wie beispielsweise Geschlecht, Alter und dergleichen, die es dem Warenanbieter ermöglichen, eine bessere Einschätzung der Marktsituation vornehmen zu können.

Insgesamt wird mit dem erfindungsgemäßen Verfahren eine Warenvermittlung vorgeschlagen, die eine vereinfachte Handhabung ermöglicht und ohne eine räumliche Beschränkung durchführbar ist. Zudem wird es dem Warenanbieter gestattet, eine zeitnahe dynamische Anpassung an sich ändernde Verkaufsbedingungen vorzunehmen, die nicht nur ihm, sondern auch den Angebotsempfängern zum Vorteil gereicht. Dabei können über die zentrale Rechnereinheit eine Vielzahl von Warenkontingenten gleichzeitig abgewickelt werden, denn wird über die Eingabe einer entsprechenden Identifizierungsnummer sichergestellt, daß ungewünschte Verwechslungen ausgeschlossen werden können.

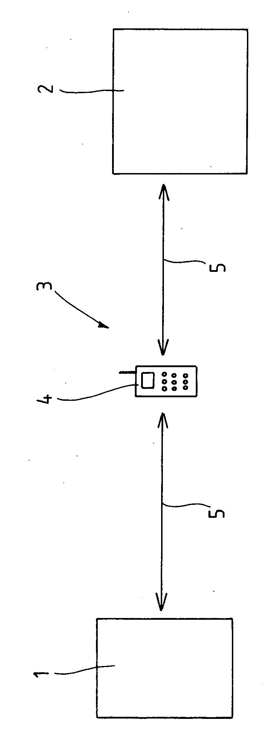

Weitere Vorteile und Merkmale der Erfindung ergeben sich aus der nachfolgenden Beschreibung anhand der Fig. 1, die das erfindungsgemäße Verfahren schematisch darstellt.

Gezeigt ist in Fig. 1 ein Angebotsempfänger 1 sowie eine vom Warenanbieter betriebene zentrale Rechnereinheit 2. Angebotsempfänger 1 und zentrale Rechnereinheit 2 stehen dabei via einer kommunikationstechnischen Verbindung 3 miteinander in Kontakt, die im vorliegenden Beispiel durch ein Mobilfunkendgerät 4 gebildet ist. Die mit 5 bezeichneten Kommunikationspfeilfe symbolisieren in diesem Zusammenhang den Informationsaustausch zwischen Angebotsempfänger 1 und zentraler Rechnereinheit 2.

Die vom Warenanbieter derzeit gültigen Verkaufsangebote können vom Angebotsempfänger 1 abgefragt werden. Zu diesem Zweck wählt er mittels seines Mobilfunkendgerätes 4 die zentrale Rechnereinheit 2 an. Sobald die kommunikationstechnische Verbindung 3 aufgebaut ist, kann der Angebotsempfänger nunmehr eine Suchanfrage an die zentrale Rechnereinheit 2 starten oder aber durch Eingabe einer gezielten Identifizierungsnummer die ihn interessierende Ware bzw. das ihn interessierende Verkaufsangebot auswählen. Vorzugsweise hat der Angebotsempfänger auch die Möglichkeit, die zum Erreichen der zentralen Rechnereinheit 2 vorgesehene Telefonnummer mit der die ihn interessierende Ware oder das ihn interessierende Verkaufsangebot gekoppelte Identifizierungsnummer zu verbinden und so eine Gesamtnummer zu wählen, die ihn ohne einen Umweg direkt zum gewünschten Verkaufsangebot führt. Nach Vermittlung des Verkaufsangebotes durch die zentrale Rechnereinheit 2 kann der Angebotsempfänger durch Bestätigung seine Zustimmung zum Verkaufsangebot erklären oder aber durch Abbruch des Telefongespräches bzw. durch die Betätigung einer entsprechenden Tastenkombination das Verkaufsangebot ablehnen.

Erfindungsgemäß ist vorgesehen, daß die von der zentralen Rechnereinheit 2 dargebotenen Verkaufsangebote dynamisch an die sich ergebenden bzw. ändernden Verkaufsbedingungen angepaßt werden. So kann beispielsweise vorgesehen sein, daß in Abhängigkeit bereits erfolgter Angebotsbestätigungen von der zentralen Rechnereinheit ein reduzierter Verkaufspreis automatisch berechnet und für Dritte, das heißt Angebotsempfänger abrufbar gespeichert wird. Der Angebotsempfänger 1 hat mithin die Möglichkeit, auf einen für ihn reduzierten Verkaufspreis zu spekulieren und in wiederholten Abständen die zentrale Rechnereinheit zur Durchsage eines unter Umständen modifizierten Verkaufsangebotes anzurufen. Sollte der Angebotsempfänger 1 seine Zustimmung zu einem Verkaufsangebot geben wollen, so kann er dies durch eine einfache Betätigung einer bestimmten, von der zentralen Rechnereinheit 2 vorgebbaren Tastenkombination auf seinem Mobilfunkendgerät 4 erreichen.

Das vorbeschriebene Ausführungsbeispiel dient ausschließlich der Erläuterung und wirkt nicht beschreibend.

### Bezugszeichenliste

- 1: Angebotsempfänger
- 2: zentrale Rechnereinheit
- 3: kommunikationstechnische Verbindung
- 4: Mobilfunkendgerät
- 5: Pfeil

## Patentansprüche

1. Verfahren zur Warenvermittlung, bei dem vom Warenanbieter ein bestimmtes Kontingent einer Ware zum Verkauf angeboten wird und die das Verkaufsangebot bestimmenden Parameter sowie eine das Verkaufsangebot identifizierende Information für Dritte abrufbar auf einer zentralen Rechnereinheit gespeichert werden, bei dem von einem Dritten die das Verkaufsangebot bestimmenden Parameter unter Nennung der das Verkaufsangebot identifizierenden Information via einer kommunikationstechnischen Verbindung zur zentralen Rechnereinheit, vorzugsweise unter Verwendung eines Mobilfunkendgerätes, abgefragt und bei Zustimmung bestätigt werden, wobei die das Verkaufsangebot bestimmenden Parameter, insbesondere der Verkaufspreis, in Abhängigkeit bereits erfolgter Angebotsbestätigungen und/oder nach Vorgabe durch den Warenanbieter von der zentralen Rechnereinheit automatisch berechnet werden.

2. Verfahren nach Anspruch 1, **dadurch gekennzeichnet, daß** in Abhängigkeit bereits erfolgter Angebotsbestätigungen von der zentralen Rechnereinheit ein reduzierter Verkaufspreis automatisch berechnet und für Dritte abrufbar gespeichert wird.

3. Verfahren nach einem der Ansprüche 1 oder 2, **dadurch gekennzeichnet, daß** als weitere das Verkaufsangebot bestimmende Parameter die Angebotszeit, die Anzahl der Angebotsabfragen und/oder die Anzahl der pro Zeiteinheit erfolgten Angebotsbestätigungen verwendet werden.

4. Verfahren nach einem der Ansprüche 1 bis 3, **dadurch gekennzeichnet, daß** als eine das Verkaufsangebot identifizierende Information eine mehrstellige Zahlenfolge verwendet wird.

5. Verfahren nach einem der vorhergehenden Ansprüche, **dadurch gekennzeichnet, daß** die mehrstellige Zahlenfolge als Teil der vom Angebotsempfänger zu wählenden Telefonnummer genutzt wird.

6. Verfahren nach einem der vorhergehenden Ansprüche, **dadurch gekennzeichnet, daß** vor oder nach einer Angebotsbestätigung eine Identifizierung des Angebotsempfängers durchgeführt wird und die diesbezüglichen Daten von der zentralen Rechnereinheit gespeichert werden.
